# EUROPEAN PATENT APPLICATION

(11) **EP 3 276 955 A1**
(43) Date of publication of application: **31.01.2018**
(21) Application number: 17001271.0
(22) Date of filing: 25.07.2017
(51) Int. Cl.: H04N 9/04, H04N 5/357, H04N 17/00

(54) **IMAGE PROCESSING APPARATUS, IMAGE PROCESSING METHOD, AND IMAGE PROCESSING PROGRAM**

(30) Priority: 28.07.2016 JP 2016148595
(71) Applicant: CANON KABUSHIKI KAISHA, Tokyo (JP)
(72) Inventor: IDA, Yoshiaki, Tokyo (JP)
(74) Representative: WESER & Kollegen

(57) **Abstract**

An image processing apparatus (104) includes a first acquirer (104a) configured to acquire first component information on a first component that is one of the rotationally symmetrical component and the shift component, acquired and stored before the input image is acquired, a first corrector (104b) configured to generate a first corrected image by a correction process with the first component information for the input image, a second acquirer (104c, 104d) configured to detect a color shift amount in the first corrected image and to acquire the second component information on a second component that is the other of the rotationally symmetrical component and the shift component based on the color shift amount, and a second corrector (104e) configured to perform a correction process with the second component information for the first corrected image.

## Description

### BACKGROUND OF THE INVENTION

### Field of the Invention

The present invention relates to an image processing technology configured to correct a lateral chromatic aberration (or chromatic aberration of magnification) of an imaging optical system, in a captured image.

### Description of the Related Art

A variety of aberrations of an optical system configured to form an object image in an image capturing apparatus, such as a digital camera, degrade the quality of a captured image. A lateral chromatic aberration among the variety of aberrations shifts one or more colors in the captured image. In the following description, the chromatic aberration causes a shift (color shift) of an imaged position for each color, and is expressed by a parallel movement of an object image for each pixel different from a blur caused by the imaging performance. Japanese Patent Laid-Open No. 2012-23532 discloses a method for detecting a lateral chromatic aberration correcting in a captured image and for correcting it through image processing. More specifically, this method detects the lateral chromatic aberration in a radial direction (or an image height or point direction) from an image center and corrects it.

As the image sensor used for the imaging apparatus includes more pixels and a unit pixel size reduces, the lateral chromatic aberration affects the image quality although this lateral chromatic aberration has not conventionally posed a substantial problem. For example, the image quality lowers when a change of the lateral chromatic aberration caused by a manufacturing error of an optical system is not corrected. Japanese Patent No. 5,505,135 discloses a method for correcting a lateral chromatic aberration caused by a manufacturing error by calculating a correction amount for a rotationally symmetrical component with respect to an image center and a correction amount for a shift component in which an amount and a direction of a color shift amount are uniform in an entire image, among the lateral chromatic aberration generated in the optical system which contains the manufacturing error.

The manufacturing error of the optical system contains decentering and a tilt of a lens (a lens element and lens unit) relative to the optical axis in the optical system, a positional shift parallel to the lens optical axis direction, and a focal length shift caused by a shape and refractive index of a lens element, etc. An object image for each color is shifted mainly by the decentering and tilt of the lens, and a magnification of the object image for each color is shifted mainly by the positional shift parallel to the optical axis direction and the focal length shift of the lens. The method disclosed in Japanese Patent Laid-Open No. 2012-23532 varies a magnification in the image height direction for the correction, and cannot correct a lateral shift of the object image for each color caused by the decentering and tilt of the lens.

The method disclosed in Japanese Patent No. 5,505,135 considers the component of the lateral chromatic aberration which uniformly occurs in the entire image, and can correct a shift of the object image for each color.

However, this method detects the shift component based on the captured image that contains a chromatic magnification shift based on a designed value and a manufacturing error. This method cannot detect that a sagittal direction edge is not contained in a captured image where only a shift component occurs in the sagittal direction edge. The "sagittal direction edge" is an edge in which a luminance changes along the sagittal direction, and is orthogonal to a meridional direction edge in which a luminance changes in a radial direction. In addition, this method may detect an edge that inclines to an expected angle in detecting the sagittal direction edge, thus detects a color shift contained in the magnification shift component as the rotationally symmetrical component, and causes a detection error.

### SUMMARY OF THE INVENTION

The present invention provides an image processing apparatus, an image processing method etc., which can precisely and robustly correct a lateral chromatic aberration caused by a manufacturing error of an optical system.

The present invention in its first aspect provides an image processing apparatus as specified in claims 1 to 9.

The present invention in its second aspect provides an image capturing apparatus as specified in claim 10.

The present invention in its third aspect provides a lens apparatus as specified in claim 11.

The present invention in its fourth aspect provides an image processing method as specified in claim 12.

The present invention in its fifth aspect provides an image processing program as specified in claim 13.

Further features of the present invention will become apparent from the following description of exemplary embodiments with reference to the attached drawings.

### BRIEF DESCRIPTION OF THE DRAWINGS

FIGs. 1A to 1E are views for explaining a lateral chromatic aberration caused by a manufacturing error according to one embodiment of the present invention.
FIGs. 2A to 2D are views for explaining a color shift in an edge portion according to this embodiment.
FIG. 3 is a block diagram of a configuration of an image processing apparatus according to a first embodiment of the present invention.
FIG. 4 is a block diagram of a configuration of a detector according to the first embodiment.
FIG. 5 is a flowchart of image processing according to the first embodiment.
FIG. 6 is a flowchart of image processing according to a second embodiment of the present invention.
FIG. 7 is a flowchart of image processing according to a third embodiment of the present invention.

### DESCRIPTION OF THE EMBODIMENTS

A description will be given of embodiments according to the present invention with reference to the accompanying drawings.

Initially, prior to a description of a specific embodiment, a description will be given of a generating mechanism of a lateral chromatic aberration caused by a manufacturing error of an image capturing optical system (simply referred to as an "optical system" hereinafter). As described above, the manufacturing error of the optical system contains decentering and a tilt of a lens (a lens element and lens unit) relative to an optical axis in the optical system, a positional shift parallel to the lens optical axis direction and a focal length shift caused by a shape and a refractive index of the lens element, etc.

In the optical system that is rotationally symmetrical with respect to the optical axis, the lateral chromatic aberration is rotationally symmetrical. As the lens decenters or tilts, a rotationally asymmetrical lateral chromatic aberration specific to a decentering optical system occurs. When the lens unit partially decenters or tilts, an image plane formed by the optical system shifts on the basis of an object plane in a direction orthogonal to the optical axis. At this time, since a shift amount changes for each wavelength due to the dispersion of the decentering lens unit, each color shifts with a uniform amount and a uniform direction on the entire image plane (imaging plane).

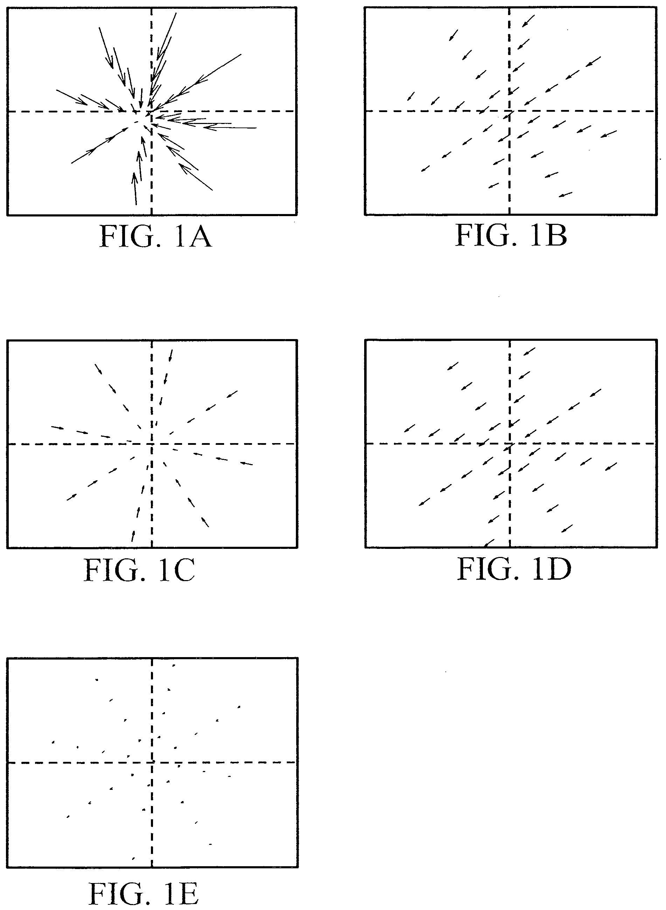

As a position shifts parallel to the optical axis direction of the lens and a focal length shifts due to the shape and refractive index of the lens element, the magnification of the object image and the rotationally symmetrical aberration component change. At this time, a variation amount changes for each wavelength due to the dispersion of the shift causing lens unit, and thus a, a position shifts rotationally symmetrically for each color. In the actual optical system, a color shift occurs in each of a plurality of lenses, and a lateral chromatic aberration with a complicated pattern consequently occurs. FIGs. 1A and 1B illustrate illustrative lateral chromatic aberration patterns. FIG. 1A illustrates an illustrative pattern of a lateral chromatic aberration when a manufacturing error is provided to an optical system that is designed to be rotationally symmetrical with respect to the optical axis. Each vector illustrated by an arrow in FIG. 1A represents an amount and direction of a lateral chromatic aberration at a start position of the vector. When a RGB image is generated as a captured image by image capturing, different patterns appear between RG and between BG. Originally, in the rotationally symmetrical optical system, the optical axis center coincides with the imaging plane center, and a lateral chromatic aberration pattern occurs around it as a symmetrical center. However, the lateral chromatic aberration has an asymmetrical pattern over a range of the imaging plane in FIG. 1A.

FIG. 1B illustrates a lateral chromatic aberration pattern after the lateral chromatic aberration pattern illustrated in FIG. 1A is corrected based on the lateral chromatic aberration component on the designed value. After the lateral chromatic aberration component on the designed value is corrected, similar to the pre-correction pattern, the lateral chromatic aberration still has an asymmetrical pattern over the entire imaging plane. This residue corresponds to the lateral chromatic aberration component caused by the manufacturing error. A correction residue occurs as illustrated in FIG. 1B in the conventional lateral chromatic aberration that does not consider the manufacturing error, and thus the captured image degrades.

The lateral chromatic aberration pattern after the lateral chromatic aberration component on the designed value is corrected can be approximated as a sum of a rotationally symmetrical component illustrated in FIG. 1C and a shift component having a color shift vector illustrated in FIG. 1D that is uniform in the entire imaging plane. For example, when only the lens decentering and tilt are considered the manufacturing error, the shift component illustrated in FIG. 1D can be corrected but the rotationally symmetrical component illustrated in FIG. 1C is left after the correction. Thus, the lateral chromatic aberration of the actual optical system which contains the manufacturing error can be approximated as a sum of a rotationally symmetrical component and a shift component that is uniform in the captured image. The rotationally symmetrical component is a sum of the component on the designed value and the component caused by the manufacturing error. When the correction is made based on the above components, the lateral chromatic aberration caused by the manufacturing error can be corrected, as illustrated in FIG. 1E. A similar lateral chromatic aberration can be corrected as in an antivibration or image stabilization optical system having decentering and a tilt of the lens element and a tilt shift lens in addition to the lens containing the manufacturing error.

Next follows an algorism for detecting the lateral chromatic aberration. A description will now be given of a method for acquiring a lateral chromatic aberration amount (color shift amount) between a G plane and an R plane as two color components (color planes) in an input image as a captured image, but this method is similarly applicable to an acquisition of the lateral chromatic aberration amount between other color planes. Initially, a known method generates color plane image data for the G plane and the R plane in an input image 200, and detects an edge based on each generated color plane image. The edge can be detected, for example, by searching for an area in which a difference (increase or decrease value) between adjacent pixels is equal to or higher than a predetermined value where pixel values in continuous pixels monotonously increase or decrease.

Next, a color shift amount is obtained in an edge portion that is an area containing the detected edge and its surrounding area, by searching a position that provides a maximum correlation between the color plane image data. For example, by moving a position of the R plane image data relative to a position of the G plane image data, a moving amount may be calculated which reduces an absolute value or a square sum of a difference of a luminance value between the two color plane image data, and the calculated moving amount may be set to a color shift amount. Since a color shift is not detected from the input image in a direction parallel to the edge in the edge portion, a color shift amount may be obtained only in one direction or in a direction orthogonal to the edge.

In an area outside the edge portion, a color shift amount can be two-dimensionally searched but a processing burden becomes heavier than the one-dimensional search. The color shift caused by the lateral chromatic aberration in the optical system remarkably appears in the edge in the image data, and may be detected in the edge portion.

When the color shift direction is known as in the method disclosed in Japanese Patent Laid-Open No. 2012-23532, the color shift amount can be easily obtained by detecting the color shift amount along the direction parallel to the color shit direction in the edge orthogonal to the color shift direction.

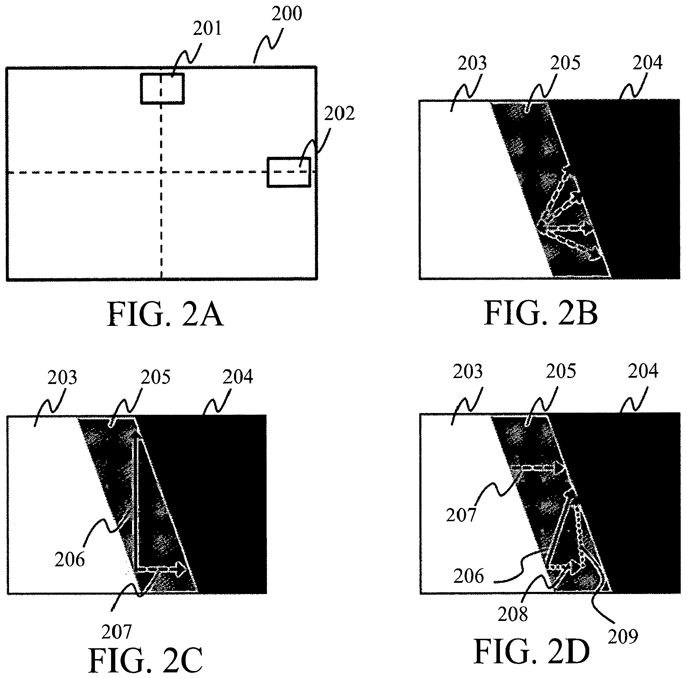

When the lateral chromatic aberration can be expressed as a sum of a rotationally symmetrical component and a shift component, a color shift direction is unknown at each position on the input image. A problem in this case will be described with reference to FIGs. 2A to 2D. In order to detect the shift component, as disclosed in Japanese Patent No. 5,505,135, a color shift amount may be detected in a perpendicular edge in which a luminance changes in the horizontal direction in an area 201 located in a perpendicular direction from an image center in an input image 200 illustrated in FIG. 2A. This edge is parallel to a meridional direction or a radial direction in which the rotationally symmetrical component occurs, and thus no color shift is caused by the rotationally symmetrical component. Hence, only the horizontal component of the shift component can be detected. The color shift component cannot be detected in the general edge portion, for the reasons illustrated in FIG. 2B.

FIG. 2B enlarges the edge portion that includes a high luminance part 203 and a low luminance part 204. Due to the influence of the lateral chromatic aberration, a color shift 205 between the R plane and the G plane occurs. Even when the lateral chromatic aberration occurs in any one of the arrow directions in FIG. 2B, the edge portion provides a similar image. Hence, when the color shift direction is unknown, the color shift direction cannot be identified.

Now again consider a detection of the horizontal component in the shift component. The perpendicular edge is detected, as described above, by detecting an area in which pixel values monotonously increase or decrease in the horizontal direction and a difference between adjacent pixel values is equal to or higher than a predetermined value. In this case, an edge slightly inclining to the perpendicular direction, as illustrated in FIG. 2C, can be detected because the pixel values monotonously change in the horizontal direction. Even when the manufacturing error of the optical system is so small that the shift component is negligible, a true lateral chromatic aberration 206 may occur due to the rotationally symmetrical component. Since this edge is detected as a perpendicular edge, a lateral chromatic aberration 207 that has been detected by detecting the horizontal component is regarded as a true value. In other words, even when there is actually no color shift component in the horizontal direction, a color shift is erroneously detected in the horizontal direction.

Similarly, consider a detection of a horizontal component in a color shift component with a perpendicular edge in an area 202 illustrated in FIG. 2A. A sum of the horizontal components of a rotationally symmetrical component 208 and a shift component 209 must be detected. Thus, once the horizontal component of the shift component 209 is previously obtained, the rotationally symmetrical component can be acquired. However, the actually detected, lateral chromatic aberration 207 is influenced by the perpendicular component of the shift component 209.

Thus, when the color shift direction of the lateral chromatic aberration is unknown, the detection error occurs since the edge slope shifts from the expected angle. The color shift direction is unknown because of the shift component in addition to the rotationally symmetrical component, rather than only because of the manufacturing error. This is true of the lateral chromatic aberration that occurs in the image stabilization optical system and the tilt shift lens. Since a magnitude of the detection error is proportional to a tangent of the edge slope. Thus, as the slope is smaller, the detection error is smaller but this is problematic to a precise correction of the chromatic aberration, as described above. The rotationally symmetrical component contains a component of a designed value in addition to a component caused by the manufacturing error, and is likely to become larger. When a comparatively large, rotationally symmetrical component is mixed in detecting a comparatively small shift component caused by the manufacturing error, the detection of the shift component becomes less reliable even when the edge slope is small.

As described above, the embodiment according to the present invention performs image processing for correcting the lateral chromatic aberration caused by the rotationally symmetrical component and the shift component, for the input image generated by the image capturing using the optical system. One of the rotationally symmetrical component and the shift component will be referred to as a first component, and the other of the rotationally symmetrical component and the shift component will be referred to as a second component. Then, this embodiment obtains first component information on the first component obtained and stored before the input image is obtained and second component information on the second component by using the first component information. Each component information contains an amount and direction of each component. The first corrected image is generated through a first correction process using the first component information for the input image, a color shift amount in the first corrected image is detected, and second component information on the second component is obtained based on the color shift amount. Moreover, a second corrected image is generated through a second correction process using the second component information for the first corrected image or a second correction process using the first and second component information for the input image.

When the lateral chromatic aberration is corrected based on the rotationally symmetrical component and the shift component, the lateral chromatic aberration containing a component caused by the manufacturing error can be corrected. In addition, the lateral chromatic aberration corresponding to the image stabilization optical system and the tilt shift lens can be corrected. However, the above detection error problems occur in detecting based on the input image, a lateral chromatic aberration that can be approximated by a model that includes the rotationally symmetrical component and the shift component.

Accordingly, this embodiment detects a color shift amount in the previously obtained and stored first corrected image obtained by correcting the input image using the first component information before the input image is obtained, and obtains the second component information based on the color shift amount. Thereby, this embodiment can robustly detect the lateral chromatic aberration component (second component) left in the first corrected image. Then, this embodiment performs the above second correction process using the second component information on the second component and the first component information, and can precisely correct the lateral chromatic aberration containing the component caused by the manufacturing error. Herein, "previously obtaining" means, for example, obtaining and storing in the manufacturing process of the optical system used to obtain the input image.

The first component may be the rotationally symmetrical component and the second component may be the shift component. When the first correction process is performed for obtained information on the rotationally symmetrical component previously stored as the first component information, the color shift amount detected in the firs corrected image can be approximated only by the shift component. In this case, a direction of the shift component caused by the shift direction of the optical element is found in the image stabilization optical system and the tilt shift lens. Thus, the color shift amount can be precisely detected and the shift component can be precisely obtained based on the color shift amount. A shift component direction is unknown in an optical system that contains a manufacturing error, but the detection error can be reduced which is caused by a slope of the edge because there is no rotationally symmetrical component. In addition, when there is no rotationally symmetrical component, the shift component can be detected without the sagittal direction edge and the color shift amount may not be necessarily detected in the edge portion. Thus, even when there is no sagittal direction edge in the first corrected image, the lateral chromatic aberration that contains the rotationally symmetrical component and the shift component can be corrected. In the optical system that contains the manufacturing error, the first component does not contain a component caused by the manufacturing error and may contain a component on a designed value. Although the first corrected image has a residue of a rotationally symmetrical component in this case, most of the rotationally symmetrical component can be corrected and the detection error caused by the edge slope can be reduced.

The first component may be the shift component and the second component may be the rotationally symmetrical component. The first corrected image can be obtained by correcting the shift component through the first correction process, and the color shift amount detected in the first corrected image can be approximated. In this case, the color shift occurs only in the radial direction, thus the color shift amount can be precisely detected, similar to the conventional rotationally symmetrical optical system, and the rotationally symmetrical component can be precisely obtained based on the color shift amount. When there is a shift component, color shift amounts are detected in the radial direction at two different points with the same image height and at different image positions and thereby the rotationally symmetrical component and the same shift component at the two points can be separated from each other. On the other hand, when the shift component has already been corrected, the rotationally symmetrical component can be obtained if there is an edge at one point at each image height. It is thus unnecessary to search for the edge that enables the color shift amount to be corrected in a plurality of azimuths from the center in the first corrected image.

The first component information obtained and stored before the input image is obtained and the third component relating to the second component may be obtained (for example, as a sum of them) and the first correction process may be performed using the first component information and the third component information. In other words, the first correction process may use information on the first component and information on the second component. For example, the first correction process may be performed with the information of the shift component and the rotationally symmetrical component caused by the manufacturing error or the first correction process may be performed with information of the rotationally symmetrical component on the designed value and the shift component caused by the manufacturing error.

Moreover, a fourth component information on the first component and the second component information area may be obtained (for example, as a sum of them) based on the color shift amount detected in the first corrected image, and the second correction process may be performed using the second component information and the fourth component information. Thereby, even when the first corrected image contains both of the shift component and the rotationally symmetrical component, the second correction process can correct them. Since the detection has the above problem, it is necessary to correct most of the color shift amount in the first corrected image. For example, once the rotationally symmetrical component on the designed value is corrected in the first corrected image, the shift component and the rotationally symmetrical component caused by the manufacturing error can be detected with a reduced detection error. In addition, once the previously stored, rotationally symmetrical component on the designed value and the rotationally symmetrical and shift components caused by the manufacturing error are corrected in the first correction error, the lateral chromatic aberration that is left in the first corrected image due to a light source color of environmental light, the degradation over time may be corrected, etc.

The color shift amount in the first corrected image may be detected by detecting the edge in the first corrected image and by detecting as a color shift amount, the shift amount of one color plane to another color plane in the edge portion as an area that contains the detected edge. Since the lateral chromatic aberration remarkably appears in the edge portion, the detection precision of the color shift amount is high in the edge portion. In addition, one-dimensional search is enough for the detection, and thus this configuration provides a fast process. When the above configuration detects the color shift amount, the detection error can be avoided or reduced.

Since the shift component and the rotationally symmetrical component caused by the manufacturing error are different for each individual optical system, the first component information may be individually measured and stored in the manufacturing process of the optical system, as described above. Instead of the manufacturing process, the first component information may be stored in the adjustment process, such as repairing. The detection from the input image has the above problem and contains the above detection error, but this problem can be solved by measuring the ideal measurement environment in the manufacturing process.

When an interchangeable lens apparatus includes the optical system and is interchangeable to an image capturing apparatus, the interchangeable lens apparatus may include a lens storage unit configured to store the first component information and the interchangeable lens apparatus may supply the first component information to the image processing apparatus or the image capturing apparatus that includes the image processing apparatus. Thereby, it is unnecessary to store the first component information for a variety of optical systems in the image processing apparatus or the image capturing apparatus. In addition, this configuration can correct the lateral chromatic aberration caused by the manufacturing error for the input image obtained by the image capturing apparatus mounted with the interchangeable lens apparatus.

The first component information may be stored as header information in the input image, and the image processing unit (apparatus) or the image capturing apparatus that includes the image processing unit may obtain the first component information from the header information. Thereby, it is unnecessary for the image processing apparatus or the image capturing apparatus having the same to store the first component information under a variety of image capturing conditions.

### FIRST EMBODIMENT

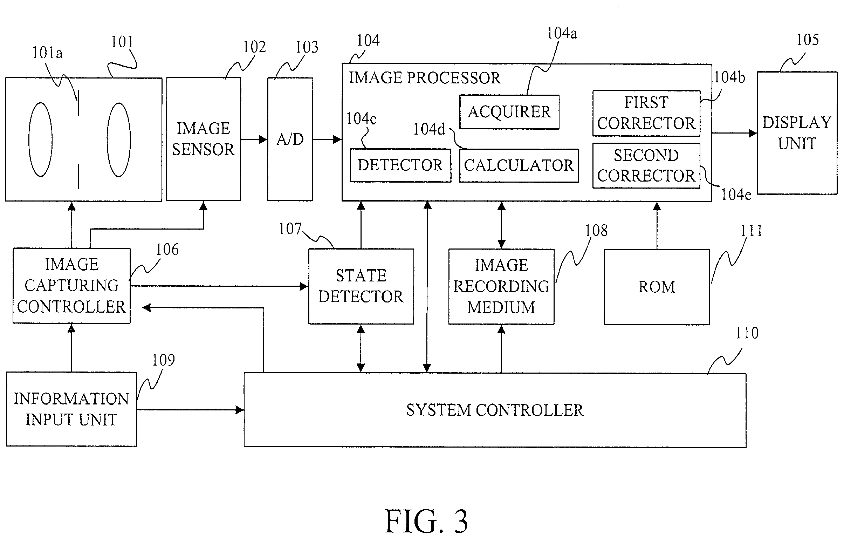

FIG. 3 illustrates a configuration of an image capturing apparatus that includes an image processing apparatus according to a first embodiment of the present invention. An image capturing unit includes an (image capturing) optical system 101 and an image sensor 102. The optical system 101 includes a diaphragm 101a and images light from an unillustrated object on the image sensor 102. The image sensor 102 includes a photoelectric conversion element, such as a CCD sensor and a CMOS sensor, photoelectrically converts the object image (optical image) formed by the optical system 101 and outputs an analog image signal.

The analog signal generated by the photoelectric conversion by the image sensor 102 is converted into a digital image signal by an A/D converter 103, and output to an image processor 104 as an image processing apparatus. The image processor 104 performs general image processing for the digital image signal, generates an input image as a captured image, and performs image processing for correcting the lateral chromatic aberration corresponding to the manufacturing error of the optical system 101.

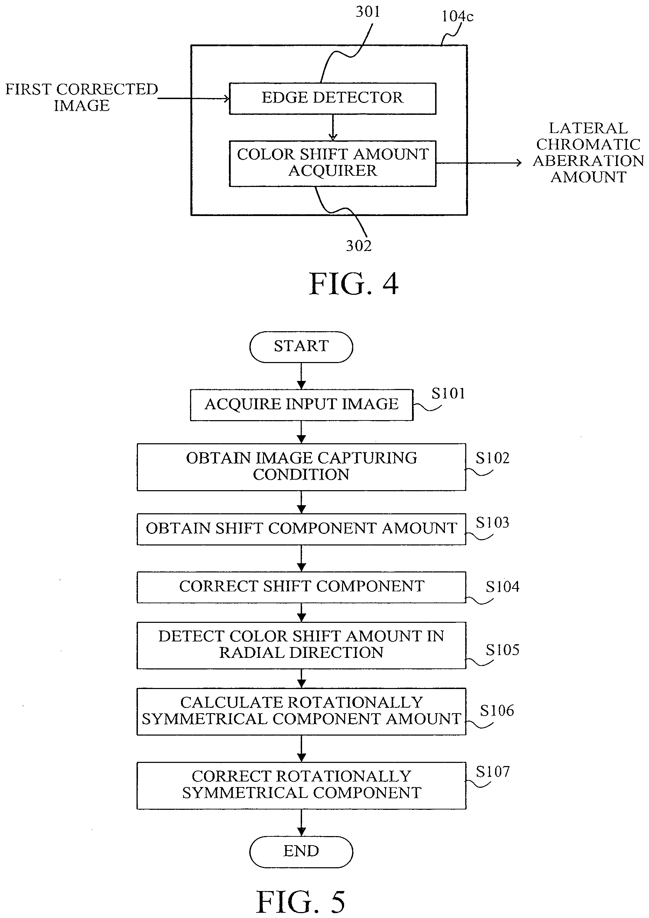

The image processor 104 includes an acquirer (first acquirer) 104a, a first corrector 104b, a detector 104c, a calculator 104d, and a second corrector 104e. The acquirer 104a reads from a ROM 111 as a storage unit (and performing an interpolation calculation which will be described later) and acquires first component information that is information of one of the rotationally symmetrical component and shift component in the lateral chromatic aberration. The first corrector 104b generates a first corrected image by performing a first correction process, which will be described later. The detector 104c detects a color shift amount in the first corrected image. The detector 104c includes, as illustrated in FIG. 4, an edge detector 301, and a color shift amount acquirer 302.

The calculator 104d calculates (obtains) second component information that is information of the other of the rotationally symmetrical component and the shift component in the lateral chromatic aberration, based on the color shift amount detected by the detector 104c. The detector 104c and the calculator 104d constitute a second acquirer. The second corrector 104e generates a second corrected image through a correction process, which will be described later.

An output image as a second corrected image generated by the image processor 104 or an output generated by performing another image process for the second corrected image are stored in the image storage medium 108, such as a semiconductor memory and an optical disc. In this case, the first component information and the second component information may be written in an output image file. The output image may be displayed on a display unit 105.

An information input unit 109 detects information that is an image capturing condition, such as an F-number and an exposure time period, selected and input by a user, and supplies the data to a system controller 110. An image capturing controller 106 moves an unillustrated focus lens in the optical system 101 in accordance with a driving command from an system controller 110, controls the F-number, the exposure time period, and the operation of the image sensor 102, and captures the object image.

A state detector 107 obtains information of the current image capturing condition in accordance with an image capturing condition acquiring command from the system controller 110. The image capturing condition contains an F-number, a zoom position, a focus position, and an exposure time period in of the optical system 101, and an ISO speed of the image sensor 102, etc. The optical system 101 may be integrally provided to the image capturing apparatus (image sensor 102) or an interchangeable lens apparatus that is interchangeable to the image capturing apparatus. When the optical system 101 is provided to the interchangeable lens apparatus, the ROM 111 may be provided to the interchangeable lens, and the acquirer 104a in the image capturing apparatus can obtain information of the first component amount through a communication between the interchangeable lens apparatus and the image capturing apparatus. Even in this case, at least part of function of the ROM 111 may be provided to the image capturing apparatus.

A flowchart in FIG. 5 illustrates a flow of image processing (an image processing method) for correcting the lateral chromatic aberration according to this embodiment. The system controller 110 as a main computer and the image processor 104 as an image processing computer execute this process in accordance with an image processing program as a computer program. This process may not be necessarily executed on the software in the computer, and at least one processor or circuit may execute each function in the image processor 104.

In the step S101, the system controller 110 controls the image capturing unit that includes the optical system 101 and the image sensor 102 so that the image capturing unit captures the object image, and instructs the image processor 104 to generate an input image.

In the step S102, the system controller 110 obtains information of the current image capturing condition through the state detector 107.

In the step S103, the image processor 104 (acquirer 104a) obtains from the ROM 111, first component information corresponding to the image capturing condition obtained in the step S102. This embodiment obtains as the first component information, information of an amount and direction of the shift component (collectively referred to as a "shift component amount" hereinafter) caused by the manufacturing error in the lateral chromatic aberration.

The ROM 111 stores, as a data table, information of the shift component amounts under a plurality of representative image capturing conditions measured in the manufacturing process of the optical system 101 (or before the input image is obtained). The image processor 104 performs an interpolation process using shift component amounts under at least two representative image capturing conditions near the current image capturing condition, and calculates and obtains the shift component amount corresponding to the current image capturing condition. The shift component amount is expressed by a two-dimensional vector between R and G and between B and G, but its actual size is stored in the ROM 111 when the interchangeable lens apparatus includes the ROM 111. In this case, the image processor 104 converts the shift component amount read out of the ROM 111 into the shift amount in a pixel unit based on the pixel size information in the image sensor 102.

In the step S104, the image processor 104 (first corrector 104b) performs the first correction process (which may be a known correction process) for correcting the shift component in the input image obtained in the step S101 using the shift component amount obtained in the step S103, thereby generating the first corrected image.

In the step S105, the edge detector 301 in the image processor 104 (detector 104c) detects a meridional direction edge (that includes an edge in a direction close to the meridional direction) in the first corrected image generated in the step S104. The color amount acquirer 302 obtains (detects) the color shift amount in the meridional direction in each edge portion that contains these edges.

In the step S106, the image processor 104 (calculator 104d) calculates the rotationally symmetrical component amount using the color shift amounts obtained in the step S105. More specifically, the image processor 104 averages the obtained color shift amounts in the image azimuth for each predetermined range of an image height, and approximates a change of the color shift amount for the image height, with a polynomial.

In the step S107, the image processor 104 (second corrector 104e) performs a second correction process (which may be a known correction process) for correcting the rotationally symmetrical component, for the first corrected image generated in the step S104 using the rotationally symmetrical component amount calculated in the step S106, thereby generating the second corrected image.

As discussed, this embodiment can precisely correct the lateral chromatic aberration caused by the manufacturing error. In the step S107, the image processor 104 (second corrector 104e) may calculate a sum of the shift component amount obtained in the step S103 and the rotationally symmetrical amount calculated in the step S106, and perform the second correction process for the input image using the calculation result. Thereby, the second corrected image can be obtained in which the lateral chromatic aberration caused by the manufacturing error is precisely corrected.

### SECOND EMBODIMENT

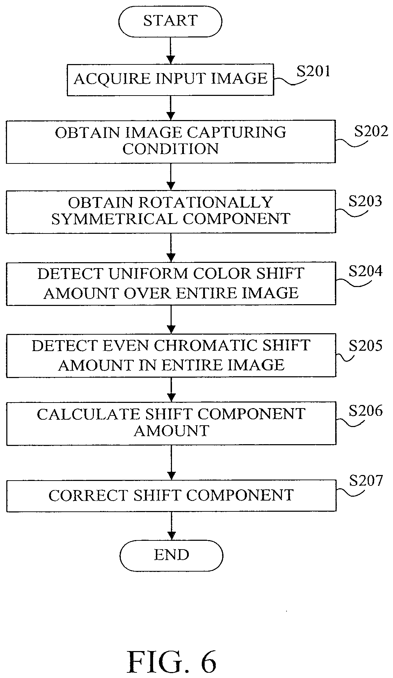

Next follows a description of a second embodiment according to the present invention. The image capturing apparatus according to the present invention has the same basic configuration as that of the first embodiment, and common components will be designated by the same reference numerals. A flowchart in FIG. 6 illustrates a flow of image processing for correcting a lateral chromatic aberration according to this embodiment. The acquirer 104a in this embodiment obtains information of the rotationally symmetrical component amount as the first component information from the ROM 111, and the detector 104c detects a shift component amount (containing the direction) as the second component information.

The steps S201 and S202 are the same as the step S101 and S102 in the first embodiment (FIG. 5).

In the step S203, the image processor 104 (acquirer 104a) acquires the information of the rotationally symmetrical component amount corresponding to the image capturing condition obtained in the step S202 from the ROM 111. Similar to the first embodiment, the ROM 111 stores, as the data table, information of the rotationally symmetrical amounts under a plurality of representing image capturing conditions measured in the measuring process of the optical system 101 (or before the input image is obtained). The image processor 104 performs interpolation processing using information of the rotationally symmetrical amount under at least two representative image capturing conditions close to the current image capturing condition. The conversion with the pixel unit where the interchangeable lens apparatus includes the ROM 111 is similar to that in the step S103 in the first embodiment.

In the step S204, the image processor 104 (first corrector 104b) performs the first correction process for correcting the rotationally symmetrical component, for the input image obtained in the step S201, using the rotationally symmetrical component amount obtained in the step S203, thereby generating the first corrected image.

In the step S205, the edge detector 301 in the image processor 104 (detector 104c) detects a perpendicular edge (containing an approximately perpendicular edge) and a horizontal edge (containing an approximately horizontal edge) in the first corrected image generated in the step S204. The color shift amount acquirer 302 obtains (detects) the color shift amount in the horizontal direction in each edge portion that contains the perpendicular edge. In addition, the color shift amount acquirer 302 acquires (detects) the color shift amount in the perpendicular direction in each edge portion that contains the horizontal edge. Since the rotationally symmetrical component has been corrected in the first corrected image, the color shift amount can be obtained in the edge portion at an arbitrary position on the image. In order to improve the detecting precision, the color shift amount may be acquired in an area as wide as possible in the input image.

In the step S206, the image processor 104 (calculator 104d) calculates the shift component amount using the color shift amount obtained in the step S205. More specifically, the image processor 104 calculates a shift component amount of the two-dimensional vector based on an average value of the obtained color shift amounts in each of the horizontal direction and the perpendicular direction.

In the step S207, the image processor 104 (second corrector 104e) performs the second correction process (which may be a known correction process) for correcting the shift component amount, for the first corrected image generated in the step S204, using the shift component amount calculated in the step S206, thereby generating the second corrected image.

As described above, this embodiment can precisely correct the lateral chromatic aberration caused by the manufacturing error. In the step S207, the image processor 104 (second corrector 104e) may calculate a sum of the rotationally symmetrical component amount obtained in the step S203 and the shift component amount calculated in the step S206, and performs the second correction process for the input image using the calculation result. This configuration can provide the second corrected image in which the lateral chromatic aberration caused by the manufacturing error can be precisely corrected.

### THIRD EMBODIMENT

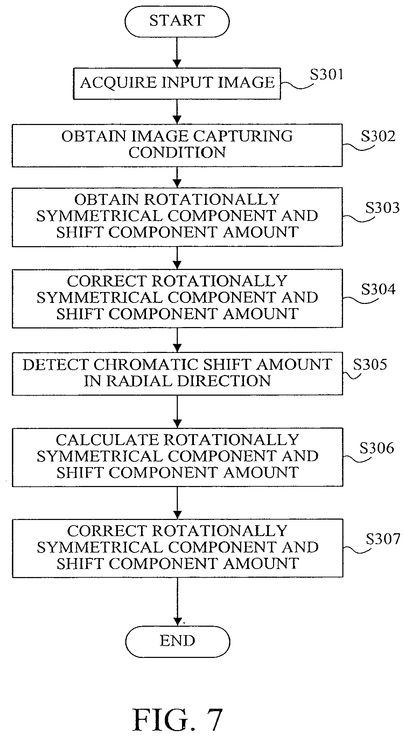

Next follows a description of a third embodiment according to the present invention. The first and second embodiments use the image capturing apparatus that includes the image processing apparatus, whereas in this embodiment, a personal computer corresponding to the image processing apparatus executes image processing in accordance with an image processing program installed in it. A flowchart in FIG. 7 illustrates a flow of image processing for correcting a lateral chromatic aberration according to this embodiment.

In the step S301, the personal computer (simply referred to as a "PC" hereinafter) obtains an input image as a captured image generated by the image capturing apparatus through a wired or wireless communication from the image capturing apparatus or a communication line, such as the Internet.

In the step S302, the PC obtains information of the image capturing condition in capturing the input image from the header information in the input image obtained in the step S301.

In the step S303, the PC (acquirer) obtains from the header information in the input image, the information of the lateral chromatic aberration amount (such as rotationally symmetrical component amount and shift component amount) on the designed value and caused by the manufacturing error of the lateral chromatic aberration of the optical system 101 under the image capturing condition obtained in the step S302. One of the rotationally symmetrical component amount and the shift component amount corresponds to first component information, and the other of them corresponds to third component information. This information has been written in the header information in the image file by the image capturing apparatus that has obtained the information through the communication from the interchangeable lens apparatus that stores the information of the lateral chromatic aberration amount on the design value and caused by the manufacturing error in the lens storage unit.

In the step S304, the computer (first corrector) performs the first correction process for correcting the lateral chromatic aberration, for the input image, using the lateral chromatic aberration that contains the shift component amount and the rotationally symmetrical component amount on the designed value and caused by the manufacturing error obtained in the step S303, thereby generating the first corrected image.

Ideally, the lateral chromatic aberration has been corrected with a sufficient precision at this time. However, in reality, the lateral chromatic aberration that contains the rotationally symmetrical component and the shift component may be left in the first corrected image, due to the degradation over time of the optical system 101. Therefore, in the step S305, the PC detects the meridional direction edge in the first corrected image, and obtains (detects) the color shift amount in the meridional direction in each edge portion. This embodiment assumes that the first corrected image contains the rotationally symmetrical component and the shift component, but the step S304 has almost corrected the lateral chromatic aberration and thus the color shift amount has few detection errors.

In the step S306, the PC (calculator) calculates the rotationally symmetrical component amount and the shift component amount left in the first corrected image using the color shift amount obtained in the step S305. One of the rotationally symmetrical component amount and the shift component amount corresponds to the fourth component information, and the other of them corresponds to the second component information. More specifically, the PC executes a known optimization method by using as variables a coefficient of each order in the rotationally symmetrical component expressed by a polynomial relating to the image height and the perpendicular and horizontal components in the shift component which are uniform in the entire image area, so that it matches the color shift amount in the meridional direction obtained in the step S305.

In the step S307, the PC (second corrector) performs the second correction process for correcting the lateral chromatic aberration, for the first corrected image, by using the rotationally symmetrical component amount and the shift component amount calculated in the steps S306, thereby generating the second corrected image. As described above, the lateral chromatic aberration caused by the manufacturing error can be precisely corrected.

This embodiment can correct the lateral chromatic aberration caused by the manufacturing error more precisely than the correction of the lateral chromatic aberration caused by the manufacturing error only by using the lateral chromatic aberration information stored in the interchangeable lens apparatus.

### OTHER EMBODIMENTS

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image processing apparatus (104) configured to perform image processing on an input image generated by image capturing using an optical system (101) for correcting a lateral chromatic aberration that contains a rotationally symmetrical component and a shift component **characterized in that** the image processing apparatus comprises:
a first acquirer (104a) configured to acquire first component information on a first component that is one of the rotationally symmetrical component and the shift component, the first component information being acquired and stored before the input image is acquired;
a first corrector (104b) configured to generate a first corrected image by performing a correction process with the first component information for the input image;
a second acquirer (104c, 104d) configured to detect a color shift amount in the first corrected image and to acquire the second component information on a second component that is the other of the rotationally symmetrical component and the shift component based on the color shift amount; and
a second corrector (104e) configured to perform a correction process with the second component information for the first corrected image or a correction process with the first component information and the second component information for the input image.

2. The image processing apparatus according to claim 1, **characterized in that** the first component is the rotationally symmetrical component, and the second component is the shift component.

3. The image processing apparatus according to claim 1, **characterized in that** the first component is the shift component, and the second component is the rotationally symmetrical component.

4. The image processing apparatus according to any one of claims 1 to 3, **characterized in that** the first acquirer further acquires third component information on the second component acquired and stored before the input image is acquired, and
that the first corrector performs a correction process with the first component information and the third component information.

5. The image processing apparatus according to any one of claims 1 to 4, **characterized in that** the second acquirer further acquires fourth component information on the first component based on the color shift amount, and
that the second corrector performs a correction process with the second component information and the fourth component information.

6. The image processing apparatus according to any one of claims 1 to 5, **characterized in that** the second acquirer detects an edge in the first corrected image, and detects, as the color shift amount, a shift amount of one color plane for another color plane in an edge portion as an area that includes the edge.

7. The image processing apparatus according to any one of claims 1 to 6, **characterized in that** the first component information is information acquired and stored when the optical system is manufactured or adjusted.

8. The image processing apparatus according to any one of claims 1 to 7, **characterized in that** the optical system is included in a lens apparatus interchangeable to an image capturing apparatus, and
that the first acquirer acquires the first component information from the lens apparatus.

9. The image processing apparatus according to any one of claims 1 to 8, **characterized in that** the first acquirer acquires the first component information from header information of the input image.

10. An image capturing apparatus comprising:
an image sensor (102) configured to capture an object image formed by an optical system,
**characterized in that** the image capturing apparatus comprises an image processing apparatus (104) according to any one of claims 1 to 9.

11. A lens apparatus that comprises an optical system and is interchangeable to an image capturing apparatus according to claim 10,
**characterized in that** the lens apparatus supplies the first component information to the image capturing apparatus.

12. An image processing method configured to perform image processing on an input image generated by image capturing using an optical system for correcting a lateral chromatic aberration that contains a rotationally symmetrical component and a shift component,
**characterized in that** the image processing method comprises the steps of:
acquiring first component information on a first component that is one of the rotationally symmetrical component and the shift component, the first component information being acquired and stored before the input image is acquired;
generating a first corrected image by performing a correction process with the first component information for the input image;
detecting a color shift amount in the first corrected image and acquiring the second component information on a second component that is the other of the rotationally symmetrical component and the shift component based on the color shift amount; and
performing a correction process with the second component information for the first corrected image or a correction process with the first component information and the second component information for the input image.

13. An image processing program that enables a computer to execute an image processing method configured to perform image processing on an input image generated by image capturing using an optical system for correcting a lateral chromatic aberration that includes a rotationally symmetrical component and a shift component,
**characterized in that** the image processing method includes the steps of:
acquiring first component information on a first component that is one of the rotationally symmetrical component and the shift component, the first component information being acquired and stored before the input image is acquired;
generating a first corrected image by performing a correction process with the first component information for the input image;
detecting a color shift amount in the first corrected image and acquiring the second component information on a second component that is the other of the rotationally symmetrical component and the shift component based on the color shift amount; and
performing a correction process with the second component information for the first corrected image or a correction process with the first component information and the second component information for the input image.
